# EUROPÄISCHE PATENTANMELDUNG

(11) **EP 0 567 057 A1**
(43) Veröffentlichungstag der Anmeldung: **27.10.1993**
(21) Anmeldenummer: 93106362.2
(22) Anmeldetag: 20.04.1993
(51) Int. Cl.: B65G 67/60, B65G 69/00, B63B 19/18

(54) **Verfahren zum Be- und Entladen von Materialien in und aus umschlossenen Räumen sowie Einrichtung zur Abdeckung der Luken von umschlossenen Räumen**

(30) Priorität: 23.04.1992 DE 4213345; 07.10.1992 DE 4233726
(71) Anmelder: PWH Anlagen + Systeme GmbH, D-66386 St. Ingbert-Rohrbach (DE)
(72) Erfinder: Steckel, Horst, W-6670 St. Ingbert (DE); Wei, Ye, W-6600 Saarbrücken (DE)

(57) **Zusammenfassung**

Vorgeschlagen wird ein Verfahren zum Be- und/oder Entladen von Materialien, insbesondere Paletten, in und aus umschlossenen Räumen, insbesondere Schiffsladeräumen (8), sowie eine Einrichtung zur Abdeckung (11) der Ladeluken (10) von umschlossenen Räumen, insbesondere Schiffsladeräumen (8), wobei vor dem Be- und/oder Entladevorgang auf die offene Ladeluke (10) eine aus mehreren Bauteilen bestehende Abdeckung (11) aufgesetzt wird, deren Segmente (12,13) im Sinne eines Öffnungs- oder Schließvorganges in Abhängigkeit der sich ihnen von oben bzw. unten nähernden Materialien (7) geöffnet und nach Passieren derselben wieder geschlossen werden.

## Beschreibung

Die Erfindung betrifft ein Verfahren zum Be- und/oder Entladen von Materialien, insbesondere Paletten, in und aus umschlossenen Räumen, insbesondere Schiffsladeräumen, indem die Ladeluke des umschlossenen Raumes geöffnet und der Be- und/oder Entladevorgang durch entsprechende Be-und/oder Entladeeinrichtungen durchgeführt wird.

Durch die DE-OS 39 26 701 ist ein Regendach für Senkrechtförderer, insbesondere zur Abdeckung von Schiffsluken bekannt, bei welchem mit dem Senkrechtförderer verbundene, öffen- und schließbare Dachabschnitte vorgesehen sind. Die Dachabschnitte sind gegenüber dem Senkrechtförderer so angeordnet, daß ein umgekehrter Regenschirm gebildet wird, d.h. die unteren Begrenzungskanten der einzelnen Dachabschnitte sind mit dem Rohr des Senkrechtförderers verbunden, währen die oberen Begrenzungskanten in Richtung auf das Rohr des Senkrechtförderers auf- und zufaltbar sind. Diese Einrichtung ist bei stationären Senkrechtförderern, wie Wendelförderern, zur wettergeschützten Be- und Entladung der in den umschlossenen Räumen enthaltenen Materialien gut geeignet, bei Be- und Entladeeinrichtungen, die die Materialien z. B. mittels einer Laufkatze zuführen, jedoch nicht einsetzbar.

Ziel des Erfindungsgegenstandes ist es, ein Verfahren zum Be- und/oder Entladen von Materialien, insbesondere Paletten, in und aus umschlossenen Räumen dahingehend weiterzubilden, daß der Be- und/oder Entladevorgang einerseits wettergeschützt vor sich gehen kann und andererseits eine im wesentlichen universell einsetzbare Einrichtung zur Abdeckung der Luke von umschlossenen Räumen zu konzipieren, die unabhängig von der Be- und/oder Entladeeinrichtung bzw. den ein- oder auszuladenden Materialien ist.

Dieses Ziel wird verfahrensgemäß dadurch erreicht, daß vor Beginn des jeweiligen Be- und/oder Entladevorganges eine Abdeckung auf die jeweilige geöffnete Ladeluke aufgesetzt wird, die beim sich anschließenden Be-und/oder Entladevorgang in Abhängigkeit der sich ihr von oben bzw. von unten nähernden Materialien geöffnet und nach deren Passieren wieder geschlossen wird.

Die Be- und/oder Entladeeinrichtung ist mit der Abdeckung vorzugsweise elektrisch verbunden. Für das Einfahren der Materialien in den umschlossenen Raum wird die Abdeckung kurz vorher automatisch geöffnet und unmittelbar nach dem Durchtreten der Materialien wieder automatisch geschlossen, wobei der Vorgang des Ausfahrens in umgekehrter Reihenfolge stattfindet.

Infolge der elektrischen Verbindung zwischen Be- und/oder Entladeeinrichtung und der Abdeckung, kann die Betätigung der Abdeckung bzw. der sie bildenden Elemente nach einer vorgegebenen Steuerkurve herbeigeführt werden.

Die Einrichtung zur Abdeckung der Ladeluke von umschlossenen Räumen, insbesondere Schiffsladeräumen, beinhaltet einen Grundrahmen, der auf dem Rand der jeweiligen Ladeluke befestigbar ist, und mehrere auf diesem Grundrahmen bewegbare, im Sinne eines Öffnungs- oder Schließvorganges betätigbare Segmente aufweist.

Vorteilhafte Weiterbildungen der Einrichtung sind den gegenständlichen Unteransprüchen zu entnehmen.

Die Einrichtung zur Abdeckung der Ladeluken besteht somit aus einem Grundrahmen, der teilweise durch eine verrippte Blechscheibe geschlossen ist. Am Rahmenunterflansch sind zur Anpassung an unterschiedlich große Ladelukenöffnungen mehrere verschiebbare pratzenartige Bauteile angeordnet, welche zum Zwecke der Höhenverstellung mit Gewinden versehen sind. Auf dem eigentlichen Grundrahmen befinden sich zwei als Wagen ausgebildete Segmente aus gekanteten Blechen mit jeweils vier daran befestigten Rollen, die auf entsprechenden Fahrbahnen hin- und herbewegbar sind, wobei als Antriebe vorzugsweise Hydromotoren zur Anwendung kommen. Andere Antriebsmöglichkeiten, wie Elektromotoren oder dgl., sind hier natürlich auch denkbar. Auf den Segmenten selber ist zumindest eine weitere, ebenfalls wagenförmig ausgebildete Schlitzabdeckung für den Seildurchtritt der Be- und/oder Entladeeinrichtung, insbesondere eines Palettenkorbes, vorgesehen. Alle Blechenden sind dergestalt gekantet, daß kein Regenwasser in den umschlossenen Raum, insbesondere den Schiffsladeraum gelangen kann.

Die Erfindung ist anhand eines Ausführungsbeispieles in der Zeichnung dargestellt und wird wie folgt beschrieben. Es zeigen:
- Figur 1 -: Einrichtung zum Be- und/oder Entladen von Schiffsladeräumen mit angedeuteter Abdeckung
- Figur 2 -: Prinzipskizze der Abdeckung im Querschnitt
- Figur 3 -: Prinzipskizze der Abdeckung gemäß Figur 2 in der Draufsicht
- Figur 4 -: Teilansicht gemäß Schnittlinie A-A der Figur 3 mit verstellbarer Abdeckung.

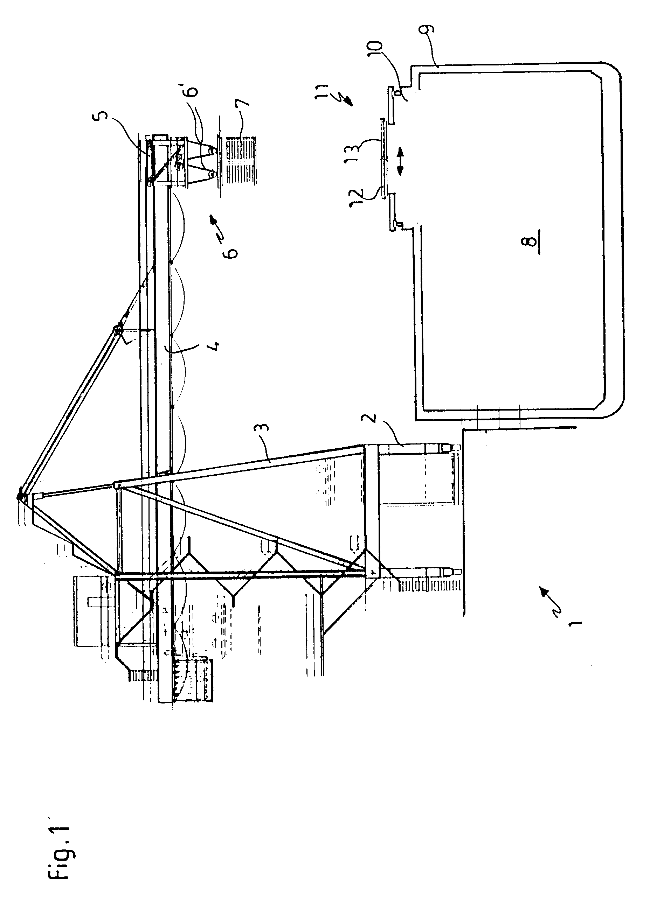

Figur 1 zeigt eine Be- und Entladeeinrichtung 1 in Form eines Schiffsbeladers, der ein verfahrbares Portal 2, eine Stütze 3 sowie einen Ausleger 4 beinhaltet, auf welchem eine Laufkatze 5 hin- und herfahrbar ist. Die Laufkatze 5 beinhaltet ein Hubwerk 6 mit Seilen 6' zur Aufnahme eines Palettenkorbes 7, der in den Schiffsladeraum 8 eines Schiffes 9 abgesenkt werden soll. Auf der Ladeluke 10 ist eine hier nur angedeutete Abdeckung 11 vorgesehen, die zwei Segmente 12, 13 beinhaltet, die im Öffnungs- bzw. Schließsinne betätigbar sind.

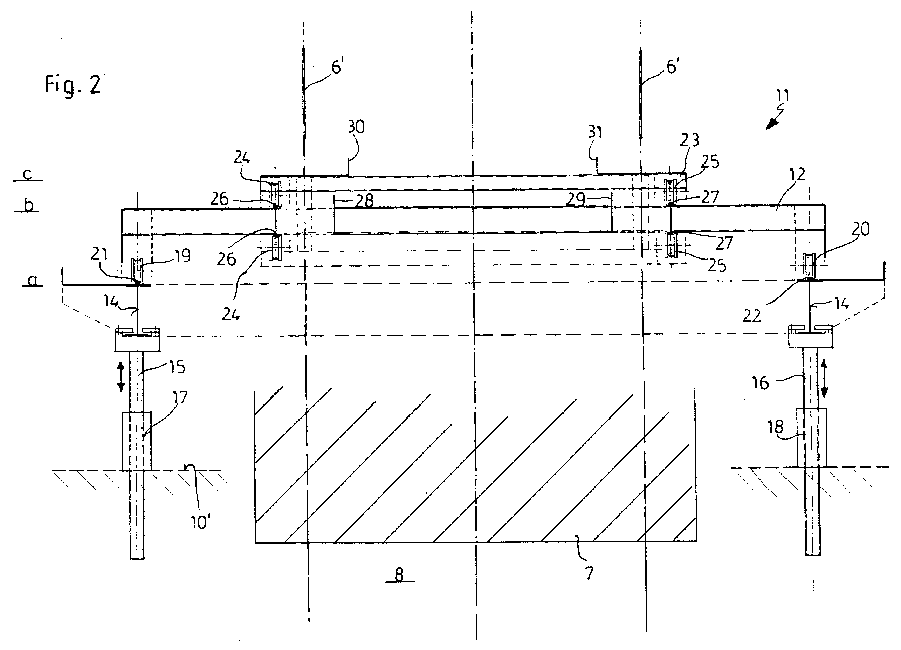

Figur 2 zeigt die erfindungsgemäße Abdeckung 11 im Querschnitt, wobei die Seile 6' des hier nicht dargestellten Hubwerkes 6 und der Palettenkorb 7 lediglich angedeutet sind. Gleichfalls nur angedeutet ist der Lukenrand 10' zur Aufnahme der Abdeckung 11, die aus einem Grundrahmen 14 gebildet ist, an welcher pratzenartige Bauteile 15, 16 horizontal verschiebbar gelagert sind. Die Bauteile 15,16 horizontal sind mittels eines Gewindes 17, 18 in ihrer Höhe verstellbar. In diesem Querschnitt angedeutet ist eines der gegenüber dem Grundrahmen 14 horizontal bewegbaren Segmente 12, das mit Rollen 19, 20 ausgerüstet ist, die auf entsprechenden Schienen 21, 22 abrollen, die durch ihre Höhe Barrieren gegen evtl. seitlichen Wasserangriff bilden. Ferner erkennbar ist eine der wagenförmig ausgebildete, später detaillierter beschriebene Schlitzabdeckung 23 für den Durchtritt der Seile 6', die gegenüber dem Segment 12 ebenfalls horizontal verfahrbar ist, und zu diesem Zweck Rollenpaare 24, 25 aufweist, die ober- und unterhalb des zugehörigen Segmentes 12 angeordnet sind und auf zugehörigen Fahrschienen 26, 27 abrollen, wobei die oberen Fahrschienen 26, 27 von ihrer Höhe her - analog zu den Schienen 21, 22 - Wasserbarrieren bilden. Es werden somit drei Ebenen a,c und c gebildet, von denen jede entsprechende Barrieren zur Vermeidung von Wassereintritt in den Bereich der Luke 10 aufweist. Die Ebene a weist in dieser Schnittansicht die Fahrschienen 21, 22, die Ebene b die Fahrschienen 26, 27 und darüber hinaus noch vertikale Stege 28, 29 und die Ebene c weist weitere Stege 30, 31 auf, wobei die Stege 28, 29 versetzt zu den Stegen 30, 31 angeordnet sind. Das ggf. von der Ebene c noch auf die Ebene b gelangende Wasser wird im Bereich der Stege 28, 29 an seinem weiteren Vormarsch nach innen gehindert und durch nicht weiter dargestellte Ablaufelemente nach außen geführt.

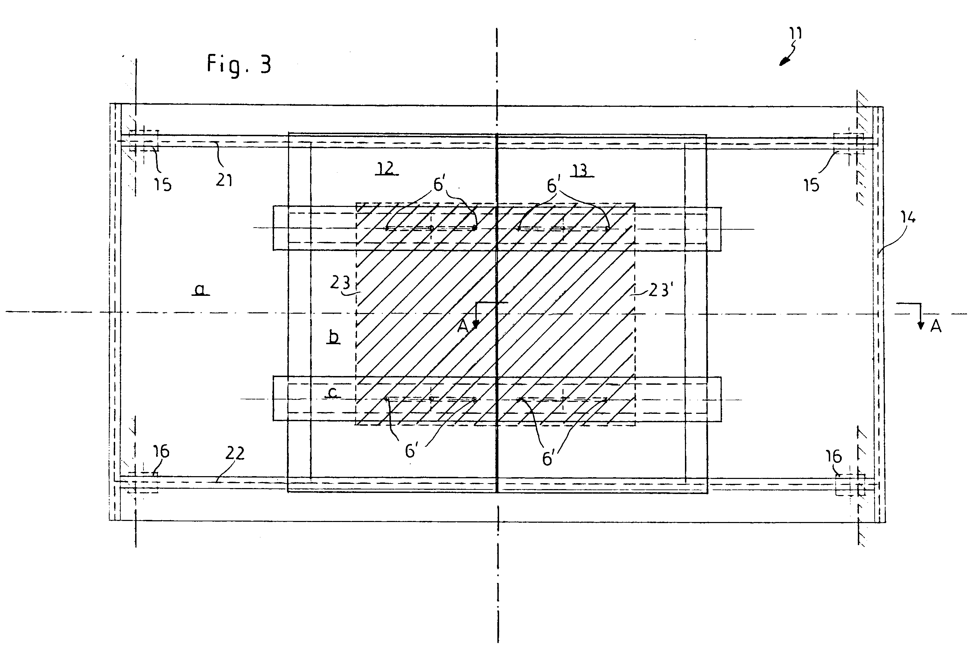

Figur 3 zeigt als Prinzipskizze eine Draufsicht auf die Figur 2, wobei gleiche Bauteile mit gleichen Bezugszeichen versehen sind. Die Abdeckung 11 beinhaltet den Grundrahmen 14, die vier pratzenartigen Bauteile 15,16, die Segmente 12, 13, die Fahrbahnen 21, 22 für die Segmente 12 und 13 sowie die Elemente 23 und 23' der Schlitzabdeckung für den Durchtrittsbereich der Seile 6', wobei der angedeutete Bereich den sich von oben nach unten verjüngenden Abschnitt der Seile 6' des Hubwerkes 6 darstellt. Ferner dargestellt sind die Ebenen a, b und c.

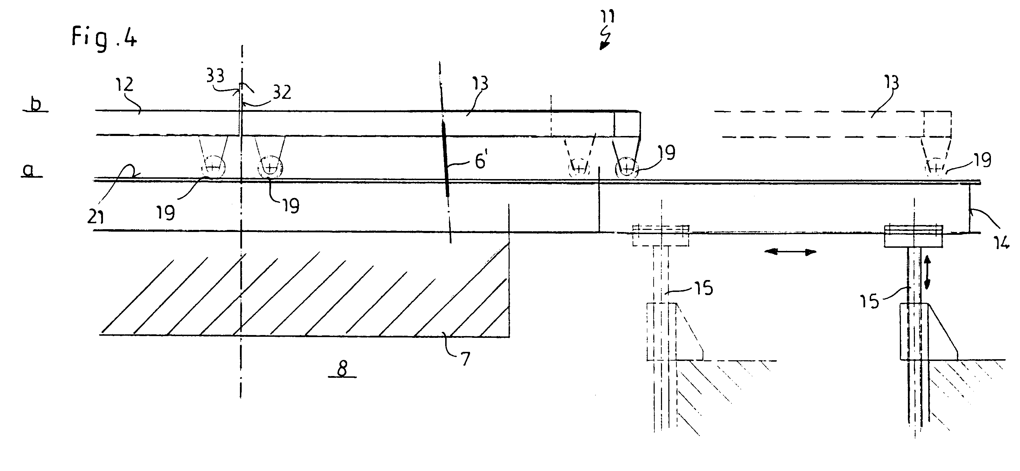

Figur 4 zeigt einen Teilschnitt der Abdeckung 11 gemäß Figur 3 (A-A), wobei folgende Bauteile erkennbar sind:
der Grundrahmen 14, eines der pratzenartigen Bauteile 15, das in horizontaler Richtung entlang des Grundrahmens 14 bewegbar ist, um auf diese Art und Weise unterschiedlichen Lukenabmessungen gerecht werden zu können, die Segmente 12 und 13 samt Rollen 19 und Schienen 21, die Seile 6' sowie der Palettenkorb 7. In den einander zugewandten Stirnflächenbereichen der Segmente 12, 13 sind vertikal verlaufende Bleche 32, 33 vorgesehen, von denen das Blech 33 dergestalt abgebogen ist, daß es das Blech 32 übergreift und somit das Eindringen von Wasser in den Laderaum 8 unterbunden wird. Die Elemente 23, 23' der Schlitzabdeckung sind bei ein- und ausfahrendem Palettenkorb 7 geöffnet und schließen diesen Schlitz (Figur 2 - Bereich 6') unmittelbar, sobald der Palettenkorb 7 die Ladeluke 10 nach oben verlassen hat. Auch hier sind (nicht weiter dargestellt) einander übergreifende Bleche analog zu den Blechen 32, 33 vorgesehen, die das Eintreten von Wasser im geschlossenen Zustand der Elemente 23, 23' sicher verhindern.

## Patentansprüche

1. Verfahren zum Be- und/oder Entladen von Materialien, insbesondere Paletten, In und aus umschlossenen Räumen (8), insbesondere Schiffsladeräumen, indem die Ladeluke (10) des umschlossenen Raumes (8) geöffnet und der Be- und/oder Entladevorgang durch entsprechende Be-und/oder Entladeeinrichtungen (1) durchgeführt wird, dadurch gekennzeichnet, daß vor Beginn des jeweiligen Be- und/oder Entladevorganges eine Abdeckung (11) auf die jeweilige geöffnete Ladeluke (10) aufgesetzt wird, die beim sich anschließenden Be- und/oder Entladevorgang in Abhängigkeit der sich ihr von oben bzw. von unten nähernden Materialien (7) zumindest teilweise geöffnet und nach deren Passieren wieder geschlossen wird.

2. Verfahren nach Anspruch 1, dadurch gekennzeichnet, daß die Be- und/oder Entladeeinrichtung (1) mit der Abdeckung (11) elektrisch verbunden wird.

3. Verfahren nach den Ansprüchen 1 und 2, dadurch gekennzeichnet, daß für das Einfahren der Materialien (7) in den umschlossenen Raum (8) Teile der Abdeckung (11) kurz vorher geöffnet und nach dem Durchtreten derselben unmittelbar danach wieder geschlossen werden, wobei der Vorgang des Ausfahrens in umgekehrter Reihenfolge stattfindet.

4. Verfahren nach den Ansprüchen 1 bis 3, dadurch gekennzeichnet, daß die Betätigung der Abdeckung (11) bzw. Segmenten (12, 13) derselben nach einer vorgegebenen Steuerkurve erfolgt.

5. Einrichtung zur Abdeckung der Ladeluke von umschlossenen Räumen (8), insbesondere Schiffsladeräumen, die einen Grundrahmen (14) beinhaltet, der auf dem Rand der Ladeluke (10) befestigbar ist und mehrere auf diesem Grundrahmen (14) bewegbare, im Sinne eines Öffnungs- oder Schließvorganges betätigbare Segmente (12, 13) aufweist.

6. Einrichtung nach Anspruch 5, dadurch gekennzeichnet, daß die Abdekkung (11) von ihrer Abmessung her variabel an verschieden große Ladeluken (10) anpaßbar ist.

7. Einrichtung nach den Ansprüchen 5 und 6, dadurch gekennzeichnet, daß im Bereich des Grundrahmens (14) mehrere horizontal verschiebbare pratzenartige Bauteile (15, 16) vorgesehen sind.

8. Einrichtung nach den Ansprüchen 5 bis 7, dadurch gekennzeichnet, daß die pratzenartigen Bauteile (15, 16) insbesondere durch ein Gewinde (17, 18) höhenverstellbar sind.

9. Einrichtung nach den Ansprüchen 5 bis 8, dadurch gekennzeichnet, daß die Segmente (12, 13) nach Art eines Wagens rollengelagert (19, 20) und auf entsprechenden Schienen (21, 22) des Grundrahmens (14) bewegbar sind.

10. Einrichtung nach den Ansprüchen 5 bis 9, gekennzeichnet durch einen hydraulischen Antrieb für das jeweilige Segment (12, 13).

11. Einrichtung nach den Ansprüchen 5 bis 10, dadurch gekennzeichnet, daß die Segmente (12, 13) aus gekanteten, entsprechend versteiften Blechen gebildet sind.

12. Einrichtung nach den Ansprüchen 5 bis 11, dadurch gekennzeichnet, daß die Segmente (12, 13) im Bereich ihrer einander zugewandten Stirnseiten einerseits mit einem über die Begrenzungskante des einen Segmentes (13) vertikal überstehenden Steg (32) und andererseits mit einem Kragen (33) versehen sind, wobei der Kragen (33) den Steg (32) mit Abstand übergreift.

13. Einrichtung nach den Ansprüchen 1 bis 12, dadurch gekennzeichnet, daß in den äußeren Bereichen der Segmente (12, 13) weitere verfahrbare nach Art von Wagen ausgebildete Elemente (23, 23') zur Abdeckung der für den Seildurchtritt notwendigen Schlitze angeordnet sind.

14. Einrichtung nach den Ansprüchen 5 bis 13, dadurch gekennzeichnet, daß die Elemente (23, 23') im Bereich ihrer einander zugewandten Stirnseiten einerseits mit einem über die Begrenzungskante des einen Elementes (23) vertikal überstehenden Steg und andererseits mit einem Kragen versehen sind, wobei der Kragen den Steg mit Abstand übergreift.

15. Einrichtung nach den Ansprüchen 5 bis 14, gekennzeichnet durch weitere Wassereintritt in den Bereich der Ladeluke (10) verhindernde Stege (28, 29, 30, 31) im Bereich der Segmente (12, 13) sowie der Elemente (23, 23').
